# FASCICULE DE BREVET EUROPEEN

(11) **EP 2 733 340 B1**
(45) Date de publication et mention de la délivrance du brevet: **21.06.2017**
(21) Numéro de dépôt: 13192940.8
(22) Date de dépôt: 14.11.2013
(51) Int. Cl.: F02K 9/97, F02K 9/84, F02K 1/08

(54) **Tige filetée d'un système de déploiement d'un divergent déployable de propulseur**
Gewindestange eines Systems zum Ausfahren eines ausklappbaren Diffusors eines Triebwerks
Threaded rod of a system for deploying a deployable propellant nozzle

(30) Priorité: 15.11.2012 FR 1260864
(43) Date de publication de la demande: 21.05.2014
(73) Titulaire: Airbus Safran Launchers SAS, 75015 Paris (FR)
(72) Inventeur: Lelong, Jacques, 60850 Puiseux en Bray (FR)
(74) Mandataire: Intès, Didier Gérard André

(56) Documents cités:
- EP-A1- 0 661 436
- FR-A1- 2 949 821
- US-A- 4 313 567
- US-A- 5 282 576

## Description

### Arrière-plan de l'invention

La présente invention concerne un divergent déployable de propulseur comprenant une partie de divergent fixe et une partie de divergent mobile apte à occuper une position rétractée et une position déployée. Plus précisément, l'invention se rapporte à un système de déploiement d'un tel divergent et à une tige filetée faisant partie d'un tel système.

Une telle tige filetée a une tête apte à être supportée par un support solidaire de la partie de divergent fixe en coopérant avec des moyens d'entrainement en rotation de la tige filetée, et une queue apte à être insérée dans un manchon de maintien solidaire de la partie de divergent fixe, la tige filetée étant apte à coopérer avec un écrou solidaire de la partie de divergent mobile de sorte que la rotation de ladite tige provoque le déplacement de la partie de divergent mobile.

Un système de commande de ce type comprenant en l'espèce trois tiges filetées régulièrement réparties angulairement, est connu par la demande de brevet français n° 2 944 063. Ce système donne globalement satisfaction, les tiges filetées, également dénommées vis sans fin, constituant à la fois les éléments qui provoquent le déplacement de la partie de divergent mobile, et des moyens de guidage de ce déplacement. Cependant, les divergents de propulseurs, et donc leurs systèmes de déploiement, sont soumis à des conditions extrêmes. En particulier, en fonctionnement, les températures ambiantes peuvent atteindre 1600 K. De ce fait, les choix quant aux matériaux pouvant être utilisés sont extrêmement restreints. En particulier, les matériaux disponibles sont en général très sensibles aux efforts de frottement. En effet, lors du choix d'un matériau, sa capacité à résister à des températures très élevées est privilégiée par rapport à ses paramètres tribologiques.

Par ailleurs, comme indiqué plus haut, la ou les tiges filetées du système de déploiement du divergent contribuent au guidage du déplacement du divergent. Pour cela, il convient que ces tiges filetées soient correctement maintenues lors de leur rotation. En conséquence, le jeu existant dans le manchon de maintien autour de la queue de la tige filetée est en général extrêmement faible. Ceci est également nécessaire pour limiter les phénomènes de vibration en fonctionnement. Cependant, en raison de la faiblesse de ce jeu, les frottements entre la queue de la tige filetée et la surface intérieure du manchon dans lequel elle est insérée sont importants.

Par ailleurs, du fait de l'environnement du divergent et des conditions extrêmes auxquelles il est soumis en fonctionnement, le système de déploiement peut s'encrasser, en particulier dans la région du manchon de maintien.

Pour toutes ces raisons, il existe un risque que la queue de la tige filetée se grippe dans le manchon, lors de sa rotation nécessaire au mouvement de la partie de divergent mobile. Ce grippage doit être évité pour assurer des conditions de fonctionnement optimum.
Le document FR2949821 divulgue des tiges filetées d'un système de déploiement de divergent de propulseur, les tiges ayant des extrémités supérieures solidaires d'un support fixe et coopérant avec la partie supérieure d'une partie de divergent mobile. Ainsi, ce document divulgue le préambule de la revendication 1.
Le document US4,313,567 divulgue des tiges filetées du même type.
Les documents EP0661436 et US5,282,576 montrent d'autres types de systèmes de déploiement de divergents de propulseurs.

### Objet et résumé de l'invention

L'invention a donc pour but de proposer une tige filetée pour un système de déploiement d'un divergent selon la revendication 1, et de proposer un système de déploiement d'un divergent, dans lequel les risques de grippage de la queue de la tige filetée dans le manchon de maintien soient minimisés.

Ce but est atteint avec une tige filetée d'un système de déploiement d'un divergent déployable de propulseur comprenant une partie de divergent fixe et une partie de divergent mobile apte à occuper une position rétractée et une position déployée, la tige filetée ayant une tête apte à être supportée par un support solidaire de la partie de divergent fixe en coopérant avec des moyens d'entrainement en rotation de la tige filetée, et une queue apte à être insérée dans un manchon de maintien solidaire de la partie de divergent fixe, la tige filetée étant apte à coopérer avec un écrou solidaire de la partie de divergent mobile de sorte que la rotation de ladite tige provoque le déplacement de la partie de divergent mobile, la tige filetée étant caractérisée en ce que la queue présente un renflement ayant au moins une gorge axialement traversante.

Ainsi, le manchon de maintien continue à jouer pleinement son rôle en coopérant avec le renflement de la queue de la tige filetée. En particulier, il est toujours possible de faire en sorte que le jeu entre la surface externe de ce renflement et la surface interne du manchon soit extrêmement faible, pour assurer un bon guidage en rotation de la tige filetée et éviter les vibrations. Cependant, du fait de la présence d'au moins la gorge axialement traversante, les risques de frottement sont minimisés, car ils concernent des surfaces diminuées par rapport à une situation dans laquelle la gorge serait absente. Par ailleurs, dans la mesure où elle est axialement traversante, la gorge permet l'évacuation de possibles particules d'encrassement qui, sinon, pourraient s'accumuler entre la queue de la tige filetée et la paroi interne du manchon, jusqu'à provoquer des frottements excessifs, voire un grippage.

Selon au moins un mode de réalisation, le renflement comporte plusieurs branches radiales séparées par des gorges axialement traversantes.

La surface de contact entre le renflement et la paroi interne du manchon correspond simplement à la surface des extrémités des branches radiales, tandis que la présence de plusieurs gorges axialement traversantes favorise non seulement une diminution de la surface de contact, mais une évacuation des salissures.

Selon au moins un mode de réalisation, ladite au moins une gorge axialement traversante représente une ouverture angulaire comprise entre 30° et 100°, de préférence comprise entre 60° et 90°.

Une telle ouverture angulaire s'avère être un bon compromis entre la nécessité de limiter les jeux entre la queue de la tige filetée et la paroi interne du manchon et celle de limiter les surfaces de contact et de favoriser l'évacuation des salissures.

### Brève description des dessins

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 est une vue en perspective d'un divergent déployable auquel l'invention peut être appliquée, vue sur laquelle la partie de divergent mobile est en position déployée ;
- la figure 2 est une vue du divergent de la figure 1, montrant la partie de divergent mobile en position rétractée ;
- la figure 3 est une vue du détail III de la figure 1 ;
- la figure 4 est une vue en coupe selon l'axe de la tige filetée, montrant la coopération de la queue de cette tige avec un manchon de maintien ;
- la figure 5 est une vue en coupe selon la ligne V-V de la figure 4 ; et
- la figure 6 est une vue en perspective de l'extrémité libre de la queue de la tige filetée.

### Description détaillée de l'invention

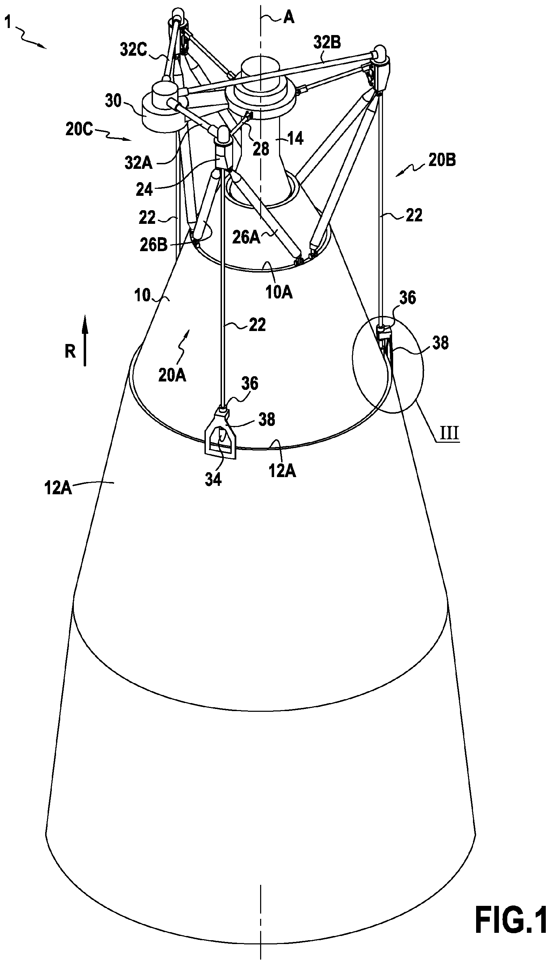

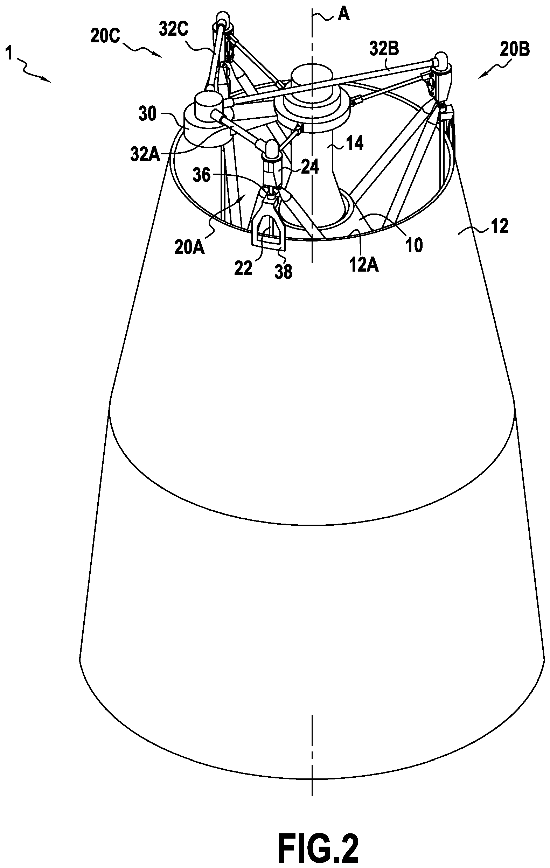

On décrit tout d'abord les figures 1 et 2 qui, dans un souci de simplification, ne montrent que les éléments d'un divergent déployable de propulseur nécessaires à la compréhension de l'invention.

Ainsi, sur la figure 1, on comprend que ce divergent déployable 1 comporte une partie de divergent fixe 10 et une partie de divergent mobile 12. La partie de divergent fixe est supportée par un support fixe du propulseur 14. Cette partie est fixée à ce support par tout moyen approprié, par exemple par boulonnage ou par soudage.

Sur la figure 1, la partie de divergent mobile est disposée à la suite de la partie de divergent fixe. Ainsi, le divergent est représenté dans sa position déployée. En revanche, sur la figure 2, le divergent est représenté dans sa position rétractée, la partie de divergent mobile étant alors disposée autour de la partie de divergent fixe.

Les parties de divergent fixe et mobile sont formées par des troncs de cône, par exemple en métal ou en matériau composite, permettant d'assurer la conduite et l'orientation des gaz chauds issus de la combustion dans un propulseur, ce dernier n'étant pas représenté.

L'invention s'intéresse plus particulièrement au système de déployant du divergent. Dans l'exemple représenté, ce système comprend trois ensembles de déploiement analogues, répartis angulairement autour de l'axe A commun aux parties de divergent fixe et mobile. Sur les figures 1 et 2, ces trois ensembles sont respectivement désignés par les références 20A, 20B et 20C.

Ces trois ensembles étant analogues, on décrit à titre d'exemple l'ensemble 20A. Cet ensemble comprend une tige filetée 22 dont la tête (non visible sur les dessins) est supportée par un support 24 solidaire de la partie de divergent fixe 10. En l'espèce, ce support 24 est lui-même porté par deux bras de potence, respectivement 26A et 26B, fixés au bord d'extrémité amont de la partie de divergent fixe, et un bras d'entretoisement 28, fixé au support fixe 14, en s'étendant sensiblement radialement par rapport à l'axe A. Les bras de potence et le bras d'entretoisement forment ainsi une triangulation de support pour la tête de la tige 22. Les extrémités de ces bras opposées, respectivement, au bord 10A de la partie de divergent fixe 10 et au support 14, portent en effet le support 24 dans lequel est insérée la tête de la tige filetée 22. Dans ce support 24, de manière connue en soi, la tête de la tige filetée coopère avec des moyens d'entraînement en rotation qui permettent de faire tourner la tige 22.

De manière connue en soi, ces moyens d'entraînement en rotation comprennent un moteur 30, par exemple un moteur électrique, et un arbre de transmission 32A, dont l'extrémité opposée au moteur 30 coopère avec la tête de la tige 22 à l'intérieur du support 24, par l'intermédiaire de moyens de renvoi d'angle appropriés, tels que des engrenages ou analogues. En l'espèce, on constate sur la figure 1 que le moteur 30 est commun aux trois ensembles de déploiement, en coopérant avec les supports des têtes de leurs tiges filetées respectives par des arbres de transmission, respectivement 32A, 32B et 32C.

En revenant à l'ensemble de déploiement 20A, on constate que la queue de la tige 22 opposée à sa tête est insérée dans un manchon de maintien 34 solidaire de la partie de divergent fixe et que cette tige coopère avec un écrou 36 solidaire de la partie de divergent mobile 12. En effet, l'écrou 36 est porté par une console 38 fixée à la partie de divergent mobile, au voisinage de son bord amont 12A.

On comprend que, lorsque la tige 22 est entraînée en rotation dans le sens de son vissage dans l'écrou 36, cette rotation fait remonter l'écrou 36 le long de cette tige dans la direction R indiquée sur la figure 1, pour amener le divergent déployable dans sa position rétractée visible sur la figure 2. En effet, dans la position rétractée représentée sur cette figure 2, la partie de divergent fixe 10 et la majeure partie de la longueur de la tige filetée sont situées à l'intérieur de la partie de divergent mobile, l'écrou 36 s'étant rapproché du support 24 de la tête de la tige 22.

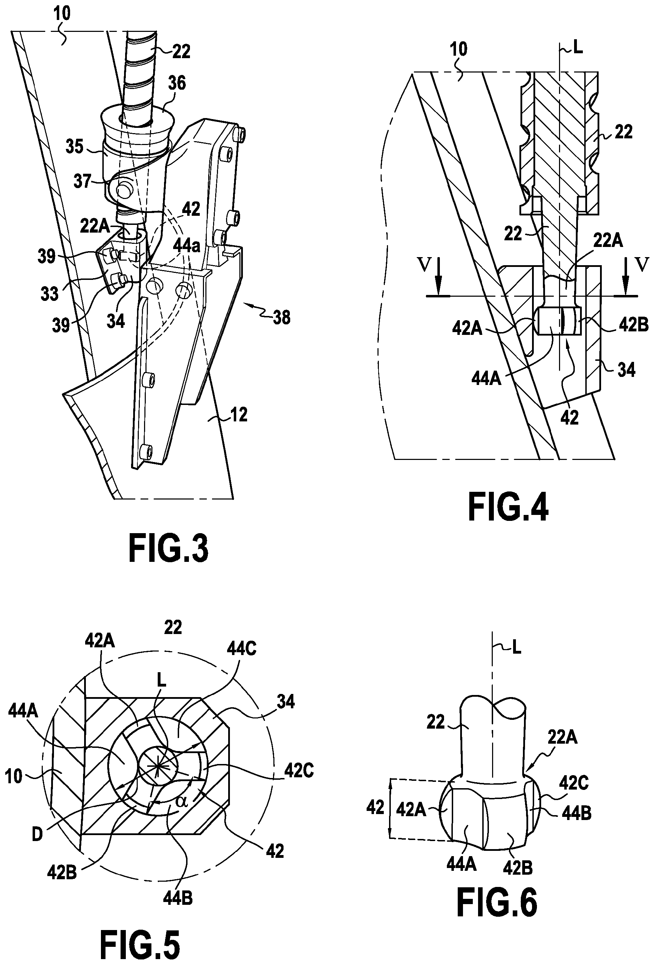

En se reportant aux figures 3 et 4, on comprend mieux l'assemblage de la queue 22A de la tige filetée 22 avec les éléments précités. On voit en effet le manchon 34 dans lequel est insérée la queue 22A de la tige 22. En l'espèce, le manchon 34 est fixé à la partie de divergent fixe 10 par des boulons 35 opérant avec une platine 33 solidaire du manchon 34.

Sur la figure 3, on voit également la console 38 qui, outre ses bras de fixation à la partie de divergent mobile 12, présente un bras de support 37 de forme semi-cylindrique, supportant un manchon 35 dans lequel l'écrou 36 est lui-même supporté en étant libre de tourner par rapport à la console 38, mais sans pouvoir se déplacer axialement par rapport à elle.

En se reportant en particulier aux figures 4 et 6, on voit que la queue 22A de la tige présente un renflement 42 ayant au moins une gorge axialement traversante, la direction axiale s'entendant de la direction longitudinale L de la tige 22. Comme on le voit mieux sur les figures 4 à 6, le renflement 42 comporte en l'espèce trois branches radiales, respectivement 42A, 42B et 42C, séparées par des gorges axialement traversantes, respectivement 44A, 44B et 44C. On voit que les trois branches radiales sont régulièrement espacées angulairement.

En se reportant à la figure 5, on comprend que l'enveloppe du renflement 42 définit les dimensions diamétrales maximales de la queue de la tige 22, ces dimensions diamétrales maximales D correspondant au diamètre interne du manchon 34. Ainsi, lors de sa rotation, la tige 22 est guidée radialement par le manchon 34. Cependant, grâce à la présence de la ou des gorges axialement traversantes, les éventuelles particules telles que les salissures circulant autour de la tige 22 peuvent s'évacuer à travers le manchon 34 sans occasionner de grippage de la rotation de la tige.

Sur la figure 5, on voit que l'ouverture angulaire α de la gorge 44B est de l'ordre de 80°. Avantageusement, cette ouverture angulaire, mesurée par rapport à l'axe de la tige, est comprise entre 30° et 100°, et est de préférence comprise entre 60° et 90°. Comme on le voit sur la figure 6, le renflement 42 présente une surface externe arrondie. Ainsi, l'enveloppe du renflement forme une portion d'une sphère.

## Revendications

1. Tige filetée (22) d'un système de déploiement d'un divergent déployable de propulseur (1) comprenant une partie de divergent fixe (10) et une partie de divergent mobile (12) apte à occuper une position rétractée et une position déployée, la tige filetée (22) ayant une tête apte à être supportée par un support (24) solidaire de la partie de divergent fixe en coopérant avec des moyens (30, 32A, 32B, 32C) d'entraînement en rotation de la tige filetée, et une queue (22A) apte à être insérée dans un manchon de maintien (34) solidaire de la partie de divergent fixe, la tige filetée (22) étant apte à coopérer avec un écrou (36) solidaire de la partie de divergent mobile (12) de sorte que la rotation de ladite tige provoque le déplacement de la partie de divergent mobile,
**caractérisée en ce que** la queue (22A) présente un renflement (42) ayant au moins une gorge axialement traversante.

2. Tige filetée selon la revendication 1, **caractérisée en ce que** le renflement (42) comporte plusieurs branches radiales (42A, 42B, 42C) séparées par des gorges axialement traversantes (44A, 44B, 44C).

3. Tige filetée selon la revendication 2, **caractérisée en ce que** le renflement (42) comporte trois branches radiales (42A, 42B, 42C) régulièrement espacées angulairement.

4. Tige filetée selon l'une quelconque des revendications 1 à 3, **caractérisé en ce que** ladite au moins une gorge (44B) représente une ouverture angulaire (α) comprise entre 30° et 100°, de préférence comprise entre 60° et 90°.

5. Tige filetée selon l'une quelconque des revendications 1 à 4, **caractérisée en ce que** le renflement (42) présente une surface externe arrondie.

6. Système de déploiement d'un divergent déployable de propulseur (1) comprenant une partie de divergent fixe (10) et une partie de divergent mobile (12) apte à occuper une position rétractée et une position déployée, le système comprenant au moins une tige filetée (22) selon l'une quelconque des revendications 1 à 5.

7. Système selon la revendication 6, **caractérisé en ce qu'**il comporte trois tiges filetées (22) selon l'une quelconque des revendications 1 à 5, qui sont régulièrement espacées angulairement.

8. Divergent déployable de propulseur (1) comprenant une partie de divergent fixe (10), une partie de divergent mobile (12) apte à occuper une position rétractée et une position déployée, ainsi qu'un système de déploiement comprenant au moins un ensemble de déploiement (20A, 20B, 20C) comprenant une tige filetée (22) selon l'une quelconque des revendications 1 à 5, un support (24) pour la tête de la tige solidaire de la partie de divergent fixe (10), des moyens d'entraînement en rotation (30, 32A) coopérant avec la tête de la tige filetée (22), un manchon de maintien (34), solidaire de la partie de divergent fixe (10) et dans lequel la queue (22A) de la tige (22) est insérée, et un écrou (34) solidaire de la partie de divergent mobile.

9. Divergent selon la revendication 8, **caractérisé en ce qu'**il comprend trois ensembles de déploiement analogues.

## Patentansprüche

1. Gewindestange (22) eines Systems zum Ausfahren eines ausfahrbaren divergenten Triebwerksdüsenteils (1) mit einem festen divergenten Düsenteilabschnitt (10) und einem beweglichen divergenten Düsenteilabschnitt (12), der geeignet ist, eine eingefahrene Position und eine ausgefahrene Position einzunehmen, wobei die Gewindestange (22) einen Kopf, welcher geeignet ist, durch einen mit dem festen divergenten Düsenteilabschnitt fest verbundenen Halter (24) unter Zusammenwirken mit Mitteln (30, 32A, 32B, 32C) zum Drehantreiben der Gewindestange gehaltert zu werden, und einen Schaft (22A), welcher geeignet ist, in eine mit dem festen divergenten Düsenteilabschnitt fest verbundene Haltebuchse (34) eingesteckt zu werden, aufweist, wobei die Gewindestange (22) geeignet ist, mit einer mit dem beweglichen divergenten Düsenteilabschnitt (12) fest verbundenen Mutter (36) zusammenzuwirken, so dass die Rotation der Stange die Bewegung des beweglichen divergenten Düsenteilabschnitts bewirkt,
**dadurch gekennzeichnet, dass** der Schaft (22A) eine Ausbauchung (42), die wenigstens eine axial durchgehende Auskehlung hat, aufweist.

2. Gewindestange nach Anspruch 1, **dadurch gekennzeichnet, dass** die Ausbauchung (42) mehrere radiale Schenkel (42A, 42B, 42C), welche durch axial durchgehende Auskehlungen (44A, 44B, 44C) getrennt sind, umfasst.

3. Gewindestange nach Anspruch 2, **dadurch gekennzeichnet, dass** die Ausbauchung (42) drei radiale Schenkel (42A, 42B, 42C), die winkelmäßig gleichmäßig beabstandet sind, umfasst.

4. Gewindestange nach einem der Ansprüche 1 bis 3, **dadurch gekennzeichnet, dass** die wenigstens eine Auskehlung (44B) eine Winkelöffnung (α) zwischen 30° und 100°, vorzugsweise zwischen 60° und 90° darstellt.

5. Gewindestange nach einem der Ansprüche 1 bis 4, **dadurch gekennzeichnet, dass** die Ausbauchung (42) eine abgerundete Außenfläche aufweist.

6. System zum Ausfahren eines ausfahrbaren divergenten Triebwerksdüsenteils (1) mit einem festen divergenten Düsenteilabschnitt (10) und einem beweglichen divergenten Düsenteilabschnitt (12), der geeignet ist, eine eingefahrene Position und eine ausgefahrene Position einzunehmen, wobei das System wenigstens eine Gewindestange (22) nach einem der Ansprüche 1 bis 5 umfasst.

7. System nach Anspruch 6, **dadurch gekennzeichnet, dass** es drei Gewindestangen (22) nach einem der Ansprüche 1 bis 5, die winkelmäßig gleichmäßig beabstandet sind, umfasst.

8. Ausfahrbares divergentes Triebwerksdüsenteil (1), umfassend einen festen divergenten Düsenteilabschnitt (10), einen beweglichen divergenten Düsenteilabschnitt (12), der geeignet ist, eine eingefahrene Position und eine ausgefahrene Position einzunehmen, sowie ein Ausfahrsystem mit wenigstens einer Ausfahranordnung (20A, 20B, 20C), die eine Gewindestange (22) nach einem der Ansprüche 1 bis 5, einen Halter (24) für den Kopf der Stange, welcher mit dem festen divergenten Düsenteilabschnitt (10) fest verbunden ist, Drehantriebsmittel (30, 32A), die mit dem Kopf der Gewindestange (22) zusammenwirken, eine Haltebuchse (34), die mit dem festen divergenten Düsenteilabschnitt (10) fest verbunden ist und in die der Schaft (22A) der Stange (22) eingesteckt ist, und eine mit dem beweglichen divergenten Düsenteilabschnitt fest verbundene Mutter (34) umfasst.

9. Divergentes Düsenteil nach Anspruch 8, **dadurch gekennzeichnet, dass** es drei gleichartige Ausfahranordnungen umfasst.

## Claims

1. A threaded rod (22) of a system for deploying a deployable divergent segment of a thruster (1), the divergent segment comprising a stationary divergent portion (10) and a movable divergent portion (12) suitable for occupying a retracted position and a deployed position, the threaded rod (22) having a head suitable for being supported by a support (24) secured to the stationary divergent portion in cooperation with rotary drive means (30, 32A, 32B, 32C) for driving the threaded rod in rotation, and a tip (22A) suitable for being inserted in a holder sleeve (34) secured to the stationary divergent portion, the threaded rod (22) being suitable for co-operating with a nut (36) secured to the movable divergent portion (12) so that rotation of said rod causes the movable divergent portion to move,
**characterized in that** the tip (22A) presents an enlargement (42) having at least one groove passing axially therethrough.

2. A threaded rod according to claim 1, **characterized in that** the enlargement (42) comprises a plurality of radial branches (42A, 42B, 42C) separated by grooves passing axially therethrough (44A, 44B, 44C).

3. A threaded rod according to claim 2, **characterized in that** the enlargement (42) includes three radial branches (42A, 42B, 42C) that are regularly spaced apart angularly.

4. A threaded rod according to any one of claims 1 to 3,
**characterized in that** said at least one groove (44B) presents an opening angle (α) lying in the range 30° to 100°, preferably lying in the range 60° to 90°.

5. A threaded rod according to any one of claims 1 to 4,
**characterized in that** the enlargement (42) presents an outside surface that is rounded.

6. A system for deploying a deployable divergent segment of a thruster (1) comprising a stationary divergent portion (10) and a movable divergent portion (12) suitable for occupying a retracted position and a deployed position, the system comprising at least one threaded rod (22) according to any one of claims 1 to 5.

7. A system according to claim 6, **characterized in that** it has three threaded rods (22) according to any one of claims 1 to 5, that are regularly spaced apart angularly.

8. A deployable divergent segment of a thruster (1) comprising a stationary divergent portion (10), a movable divergent portion (12) suitable for occupying a retracted position and a deployed position, together with a deployment system comprising at least one deployment assembly (20A, 20B, 20C) comprising a threaded rod (22) according to any one of claims 1 to 5, a support (24) for the head of the rod secured to the stationary divergent portion (10), rotary drive means (30, 32A) co-operating with the head of the threaded rod (22), a holder sleeve (34) that is secured to the stationary divergent portion (10) and in which the tip (22A) of the rod (22) is inserted, and a nut (34) secured to the movable divergent portion.

9. A divergent segment according to claim 8,
**characterized in that** it comprises three analogous deployment assemblies.
